# EUROPEAN PATENT APPLICATION

(11) **EP 4 813 196 A1**
(43) Date of publication of application: **30.09.2026**
(21) Application number: 25167202.8
(22) Date of filing: 28.03.2025
(51) Int. Cl.: A01G 9/14, A01G 31/06

(54) **DEVICES, SYSTEMS AND METHODS FOR VERTICAL FARMING**

(71) Applicant: AutoStore Technology AS, 5578 Nedre Vats (NO)
(72) Inventor: FJELDHEIM, Ivar, 5578 Nedre Vats (NO); JOSHI, Parth, 5578 Nedre Vats (NO)
(74) Representative: Kilburn & Strode LLP

(57) **Abstract**

The disclosure relates to a container (400) for vertical farming in an automated storage and retrieval system, comprising a frame defining a base (410) and side walls (402, 402, 406, 408) upwardly extending from the base (410), the base and side walls defining an interior space, and a tray fixation mechanism configured to receive and secure a tray configured to support a farmed organism within the interior space.

## Description

### TECHNICAL FIELD

This disclosure relates to devices, systems and methods for vertical farming in an automated storage and retrieval system. More particularly, it relates to a container, a tray, a system comprising the container and the tray, and a kit of parts.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse. Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Vertical farming is a method of growing organisms in vertically arranged boxes, containers, trays, or bins. Vertical farming in an automated storage and retrieval system poses many challenges. Depending on the nature of the farmed organism, there may be problems related to light access, fluid management, air circulation, temperature control, disinfection, pest control, or any other problem known to a skilled person. Given that the farmed organisms may die, it is also important to provide solutions for removal of dead organisms, and for removal of any other sources of possible contamination.

In general, prior art solutions for vertical farming are unsuitable for use in an automated storage and retrieval system, and prior art storage and retrieval systems are unsuitable or at least not well adapted for vertical farming. Therefore, it would be advantageous to provide new improved solutions.

This disclosure provides devices, systems and methods that address at least some of the problems described above.

### BRIEF DESCRIPTION OF THE DRAWINGS

The disclosure will be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows an example container for vertical farming in an automated storage and retrieval system;
Fig. 5 shows an example tray for vertical farming in an automated storage and retrieval system;
Figs. 6 and 7 show a part of the tray of Fig. 5 from side-on and perspective views respectively;
Fig. 8 shows an example system for vertical farming in an automated storage and retrieval system, comprising a container and a tray;
Fig. 9 shows an example system for vertical farming in an automated storage and retrieval system, comprising a container and a plurality of trays; and
Fig. 10 shows a flowchart of an example method for vertical farming in an automated storage and retrieval system.

### DETAILED DESCRIPTION

In overview, the present disclosure relates to a container, a tray, a system, and a method for vertical farming in an automated storage and retrieval system. The disclosure describes a container with a frame that provides structural support and spatial separation for a tray that may be received by a tray fixation mechanism comprised in the container. The tray fixation mechanism inhibits movement of the tray, which leads to a high degree of structural stability. This structural stability may be synergistic in the sense that the container stabilises the tray and the tray similarly stabilises the container.

Furthermore, the disclosure describes a tray with a support structure configured to support a farmed organism such that it can be used in a vertical farming implementation within an automated storage and retrieval system. The tray comprises a fluid entry portion and a fluid exit portion. The tray thereby provides both a living and growth space for the farmed organism, as well as an integrated fluid management solution. Fluid management and prevention of spillage and dripping are major challenges in vertical farming, and the tray arrangements described herein provide an effective, easy-to-handle, and easy-to-manufacture solution to these problems.

A kit of parts suitable to be assembled to form a tray as described herein is also disclosed. Such a kit of parts may lead to simplified manufacture, transportation, and storage of unused trays.

This disclosure further describes a system comprising a container and a tray as described herein. Such a system provides an integrated functional unit for vertical farming in automated storage and retrieval system, providing a combination of benefits of both the container and the tray, and enabling an efficient realisation of a vertical farm.

A method for vertical farming in an automated storage and retrieval system is also disclosed. The method comprises the steps of receiving a first volume of fluid by a first farming system, guiding the first volume of fluid towards a first farmed organism supported by a tray held within the first farming system, expelling at least a portion of the first volume of fluid from the tray of the first farming system, and receiving the expelled portion of fluid at a target location below the farming system. This method provides an effective way to configure the system disclosed herein for vertical farming and enables efficient fluid management.

### Container

Turning now in more detail to the disclosed container, in a first aspect the present disclosure provides a container for vertical farming in an automated storage and retrieval system. The container comprises a frame defining a base and side walls upwardly extending from the base. The base and side walls thereby define an interior space of the container, into which one or more trays supporting farmed organism(s) may be placed.

The frame may provide structural support for the container. Additionally, the frame may provide a protective area around the tray(s), which may prevent contamination and provide the farmed organisms with a space to grow. Additionally, the frame may allow for stacking and vertical or horizontal arrangement of the trays. The frame may be made of plastic, metal, resin, or any other suitable material. The frame may be also made from a plurality of different materials.

The base and side walls, defined by the frame, may be open, partially open, made of solid material, or made of solid material containing openings or apertures. In other words, while the terms "base" and "side walls" are a convenient way to describe the various planes defined by the frame, it should be understood that in some examples the base or any of the side walls may be mostly devoid of material. Such open base and side walls may be used to provide light access, or to enable air circulation to farmed organisms within the container. The base and the side walls may have multiple openings in them and may comprise one or more material elements, for example a mesh or a grating.

The base and the side walls define the interior space of the container, which may also be considered as the internal volume of the container. The interior space may therefore be delineated by or align with the edges of the frame. It will be appreciated that, in examples where the top of the container is open, a farmed organism growing within the container may extend beyond the interior space, for example through the top opening of the container.

The container further comprises a tray fixation mechanism configured to receive and secure (inhibit movement of) a tray within the interior space of the container. In particular, the tray fixation mechanism may receive and secure a tray that is configured to support a farmed organism, as already described. By providing such a fixation mechanism, one or more trays used in vertical farming can be stored within the container. The container can then be used within the context of an automated storage and retrieval system, as described in more detail herein, to provide an automated vertical farming system.

The tray fixation mechanism may comprise any suitable mechanism for receiving and inhibiting movement of the tray. The tray fixation mechanism may advantageously be configured to stabilise the tray within the interior space of the container. This is advantageous for keeping the tray in the right position and orientation, and for preventing accidents during manipulation or movement of the container. A particular example implementation of the tray fixation mechanism will be described below in connection with one of the examples disclosed herein.

In some examples, the tray fixation mechanism may be releasable, in other words be configured to allow the tray inserted thereinto to be removed, for example by a vehicle or a robot in the automated storage and retrieval system or by a human operator. For example, the tray fixation mechanism may allow the tray to be pulled out when (enough) pulling force is applied, and/or may comprise operable features (e.g. a clasp or switch) that, when operated, release or open to allow the tray to be pulled out.

The tray fixation mechanism may comprise a flexible portion configured to exert pressure on the received tray to thereby inhibit its movement. For example, the flexible portion may deform upon coming into contact with a feature of the tray, such as a securing mechanism of the tray (described in more detail below).

The use of a flexible fixation mechanism means that the requirements for manufacturing precision of the tray and/or container may be lower, since the flexible portion may accommodate manufacturing imperfections (e.g. variations in component size), or use them to inhibit the movement of the tray. Decreased manufacturing precision requirements (and/or increased tolerances) may also lead to faster and/or more efficient manufacturing, and may negate the need to use high-precision manufacturing methods. For example, the container may be moulded from a suitable material, without any need for post-processing.

The flexible portion may comprise any suitable non-rigid feature(s), for example a flexible hook, and/or a flexible string, and/or a portion of the container configured to deform. The flexible portion may act as the sole movement inhibitor for a received tray, or it may reinforce the effect of one or more other features of the tray fixation mechanism. The flexible portion may be configured to elastically deform upon receiving the tray. The phrase "elastically deform" means that the flexible portion may return, or essentially return, to its non-deformed state once the tray is removed.

The container may comprise a tray guiding portion configured to guide at least a portion of the tray towards the tray fixation mechanism. The tray guiding portion may be used to simplify positioning of the tray within the interior space of the container. For example, if the tray is being inserted by a vehicle in an automated storage and retrieval system, the tray guiding portion may guide the tray towards the tray fixation mechanism, thereby negating the need for highly sensitive manipulation and precise sensors on the vehicle to ensure correct placement of the tray within the container. The tray guiding portion may receive a suitable counterpart, such as a protrusion, on the tray and guide it to the tray fixation mechanism. In some examples, this may occur while a vehicle in the automated storage and retrieval system moves the tray towards or into the container.

The tray guiding portion may comprise a first groove for receiving and guiding at least a portion of the tray. The tray guiding portion may taper toward the tray fixation mechanism, such as a flexible portion of the tray fixation mechanism. At least some of the tray fixation mechanism may comprise a groove that is narrower than the tray guiding portion. In this manner, the tray may slide into an increasingly tapered groove until it is ultimately gripped or wedged in the tray fixation mechanism.

The tray guiding portion may additionally or alternatively comprise one or more of: at least one magnet configured to guide at least a metallic portion of the tray; at least one actuator configured to guide and manipulate the tray; at least one electro-magnetic component configured to guide the tray using electro-magnetic phenomena, for example electrostatic or magnetic attraction and/or repulsion; and at least one air flow component configured to direct a flow of air to exert a force on the tray to guide the tray.

The container may comprise a tray entry portion configured to receive a tray prior to the tray guiding portion and to guide the tray towards the tray guiding portion. The tray entry portion may comprise a second groove. The tray entry portion may taper towards the tray guiding portion.

The tray entry portion may further simplify the insertion of the tray by guiding the tray towards the tray guiding portion, which in turn guides the tray toward the tray fixation mechanism as described above. The tray entry portion may be realised as a tapered groove or channel configured to receive the tray while it is moving into the container and guide it towards the tray guiding portion. The tray entry portion may be realised by any of the means in which the tray guiding portion may be realised, described above and also in more detail below. The tray entry portion may comprise a portion that is wider than the tray guiding portion and/or that tapers towards the tray guiding portion. The tray entry portion may 'catch' the tray, thereby further eliminating the need for precise horizontal positioning and enabling the tray to reach the tray guiding portion (and ultimately the tray fixation mechanism) more easily.

At least one of the tray fixation mechanism, tray guiding portion, and tray entry portion may be integral with the frame. This may simplify manufacture and provide a greater degree of structural resilience and stability. Alternatively, at least one of the tray fixation mechanism, tray guiding portion, and tray entry portion may be added to the container without being an integral part of it, which may provide greater versatility and reconfigurability of the container.

As explained above, an appropriate fluid may be used to support (e.g. feed or water) a farmed organism within the container. In some examples, it may be desirable for fluid to exit the container, for example in the case of excess fluid that has not been absorbed by the farmed organism. With this in mind, the container may advantageously comprise a fluid conduit configured to guide collected fluid (e.g. excess or runoff fluid) towards a target location below the container. The presence of the fluid conduit enables more precise fluid management, by ensuring that fluids are collected at the target location rather than, for example, simply overflowing from the container in an uncontrolled manner. The fluid conduit also thereby reduces the probability of contamination due to uncontrolled flow or dripping, e.g. onto other organisms. The fluid conduit may comprise a drip edge, which may optionally protrude from the container. The fluid conduit may be integral to the frame, or may be in addition to the frame, with each arrangement having the same respective advantages described above in respect of the fixation mechanism. The fluid conduit may guide fluid passively, by providing a surface or a groove along which the fluid may flow. Alternatively or additionally, the fluid conduit may guide collected fluid to the target location in a more active manner, for example using sucking or other forces.

The target location towards which the fluid conduit guides collected fluid may comprise one or more of: a fluid collection point, another container of the automated storage and retrieval system, and/or another tray configured to support a farmed organism. The fluid collection point may comprise any appropriate element in the automated storage and retrieval system, such as a drain or a chemical fluid collector. The target location may also comprise another container, for example a container with solid base and side walls that collects the dripping fluid, a container filled with chemicals that absorb the dripping fluid, a container that comprises a device to process the fluid, or any other suitable container. By guiding excess fluid from the container to a target location in this manner, the fluid may be (re-)used to support the growth of farmed organisms present in the target location. The provision of a fluid guiding mechanism and a defined target location may also prevent flooding or contamination in the automated storage and retrieval system as described above.

The container may comprise at least one support member configured to provide structural support to the container. That is, in addition to the frame which defines the interior space of the container, the container may comprise at least one additional member configured to provide additional support to the container. For example, the frame may define the twelve edges and six faces of a (rectangular) cuboid, and the at least one support member may be provided in addition to this frame. The at least one support member may comprise a strut or any material component in the base or in any of the side walls. The at least one support member may be configured vertically, diagonally, or horizontally within the base or any of the side walls. The at least one support member may be configured to cross the interior space. The at least one support member may be made from the same material as the frame, from a different material than the frame, or from a mixture of materials. The at least one support member may be integral to the frame. The at least one support member may provide a container with a higher level of structural stability and resilience. The at least one support member may also provide a structural fail-safe mechanism to maintain at least some level of structural stability in case of an accident, malfunction, or degradation of the container.

The container may comprise one or more interface features configured to enable a vehicle of the automated storage and retrieval system to interact with the container, optionally from above. The one or more interface features may enable more efficient manipulation of the storage container using a vehicle of the automated storage and retrieval system. The one or more interface features may be integral to the frame or may be in addition to the frame, with each arrangement having the same respective advantages described above in respect of the fixation mechanism.

The frame may comprise at least one stacking portion configured to inhibit relative movement of an additional container stacked above or below the container. The at least one stacking portion may enable more efficient stacking of containers without the need for precise positioning of containers. Alternatively or additionally, it may provide a greater degree of structural stability to a column of stacked containers. It may also inhibit relative movement of individual containers within a column of stacked containers, thus making the column more resilient and more resistant to falling apart. In an example, the stacking portion is configured to interface with a neighbouring container, such as a container stacked above or below in a stack of containers. The at least one stacking portion may comprise a protrusion or a hole configured, for example, to matingly interface with a respective protrusion or hole of another container.

### Tray for supporting a farmed organism

In a second aspect, the present disclosure provides a tray for vertical farming in an automated storage and retrieval system. The tray comprises a support structure configured to support a farmed organism and may be inserted into the container described above and in more detail below to provide a vertical farming solution in an automated storage and retrieval system. The support structure may comprise any suitable feature for supporting a farmed organism on or in said structure, such as one or more shelves, platforms, frameworks, meshes, pouches or any combination thereof.

The support structure may expose a farmed organism to the environment. The support structure may enable access to nutrients, light, fluid, air, or any other environmental or material factor required by the farmed organism. If the farmed organism comprises a root system, a mycelium, or any similar support organ, organelle, or structure, the support system may provide support for said organism support structure. The support system may allow at least a part of the farmed organism to grow outside the support system. The support system may confine the farmed organism within a desired space within the tray. The support structure may comprise a removable cover or hatch for access to the farmed organism.

The support structure may be configured to enable the farmed organism(s) to grow in at least two directions, for example out of two sides of the tray. This improves the volume or number of farmed organisms that can be grown on a single tray and provides access to the farmed organism from at least two directions. In this manner, the support structure may be configured to enable the farmed organism to be harvested by a vehicle or operator of the automated storage and retrieval system from the at least two directions. For example, a harvesting vehicle may harvest the farmed organism from at least two sides of the tray, possibly at the same time, which provides improved versatility and efficiency.

As noted above, it may be desired to provide a fluid to the farmed organism supported by the tray. With this in mind, the tray further comprises a fluid entry portion configured to receive and guide fluid toward the support structure for providing to the farmed organism. By receiving and guiding fluid in the fluid entry portion, the tray enables efficient fluid management and minimises the contamination risk associated with fluid spilling or dripping onto the farmed organism. The fluid entry portion may comprise one or more sloped portions, surfaces, and/or openings. The fluid entry portion may suck, drain, absorb, or otherwise enable fluid to enter (an internal volume of) the tray. The fluid entry portion may be integrated into at least a part of the tray. For example, the fluid entry portion may comprise an edge of the tray that delineates the area configured for fluid entry. The fluid entry portion may be configured anywhere on the tray, however advantageously the fluid entry portion may be provided toward the top of the tray in use, so as to more effectively receive fluid flowing or falling toward the tray from above as may occur in a vertical stack of containers within an automated storage and retrieval system. Accordingly, in one advantageous implementation, the fluid entry portion may comprise an upper edge or surface of the tray. In other examples, the fluid entry portion may be configured on a side of the tray. The fluid entry portion may comprise a fluid reservoir that may store fluid before guiding said fluid to the support structure.

The fluid entry portion may comprise a funnel to receive the fluid. The term "funnel" should be interpreted broadly as comprising at least one sloped surface that tapers from a larger to a smaller aperture or opening and thereby guides fluid towards said smaller opening. The funnel may thereby provide a wide surface area on which to catch or otherwise receive fluids, thereby preventing spillage or dripping by providing a wider area where fluids may be received. It will be appreciated that the funnel need not be of a conical shape, but may instead be realised as two surfaces that taper towards at least a portion of the fluid entry portion. The funnel may be made of a different material than the tray, or it may comprise a treated and/or coated surface. For example, the different material, or the treated and/or coated surface, may be more resistant to corrosion or may be more hydrophobic, or may have any other attribute that improves guiding of fluids or improves resistance against material degradation.

The fluid received by the tray may comprise at least one of: a liquid, a gel, a mist, a fog, a suspension, or another fluid medium. The fluid may be liquid or gaseous. The fluid may comprise at least one of: water, nutrients, pharmaceuticals, or other substances that support or inhibit the growth of the farmed organisms, or that remove or manage contaminants. Such contaminants may be other organisms, contaminating substances or environmental factors. The fluid may be used for temperature management. A skilled person will readily recognise that the fluid may be any suitable fluid used in hydroponics, aeroponics, aquaculture or similar growing techniques. Similarly, the fluid may be any substance that may support or enable growth, metabolism, reproduction, or any vital function of the farmed organism.

In order to further improve the fluid management properties of the tray, the tray comprises a fluid exit portion configured to expel excess fluid from the tray. The fluid exit portion may comprise any appropriate feature configured to perform this function. The fluid exit portion provides drainage, and therefore reduces the chance of oversupply of fluid which can lead to contamination and/or death of the farmed organism. Furthermore, as will be explained below, the fluid exit portion may enable effective fluid management by allowing fluid exiting the tray to be guided more easily to a specific location, thereby reducing the chance of spillage or dripping onto other farmed organisms within the automated storage and retrieval system. The fluid exit portion may comprise a passive feature, for example one or more openings, a funnel, and/or a dripping edge. Such a passive feature may enable expelling of fluid due to gravity or adhesion and may enable (controlled) dripping or collection at a desired location. The fluid exit portion may comprise an active feature that expels excess fluid. For example, the fluid exit portion may be controllable to expel fluid based on receiving a control signal, and/or may comprise a reservoir, an actuator that sucks fluids into said reservoir and an actuator that actively expels (e.g. squirts out) fluid collected in said reservoir.

As already noted, the tray may be such that the fluid exit portion is configured to expel excess fluid from the tray towards a target location below the container. The target location may be as described above in relation to the container and may provide the same effects and benefits. In particular, the target location may comprise one or more of: a fluid collection point, another container of the automated storage and retrieval system, and/or another tray configured to support a farmed organism.

The tray may be configured to confine fluid received by the fluid entry portion within the tray prior to expelling the fluid from the fluid exit portion. This configuration reduces the chance of spillage or dripping and therefore provides efficient fluid management and contamination prevention. For example, fluid may be guided such that it remains (solely) within the inner volume of the tray prior to expulsion. Guiding of the fluid in this manner can be achieved, for example, through the provision of one or more fluid openings, channels, or conduits configured to facilitate fluid flow through the interior of the tray. In particular, said fluid openings, channels or conduits may help confine fluid within the tray and prevent fluid from exiting the tray at a point other than the fluid exit portion.

The tray may comprise a substrate, supported by or held adjacent to the tray's support structure, configured to support the growth of the farmed organism. The substrate may be configured to provide nutrients, fluids, support and/or temperature management for the farmed organism. The substrate may be comprised, at least in part, in or on the support structure. The substrate may be made of one or more material such as soil, gel, cellulose, rock wool, glass, materials suitable for cultivation of bacteria, fungi, cells, or any other suitable material configured to support the growth of the farmed organism. Alternatively or additionally, the substrate may comprise a material structure, for example a mesh or a frame to which the farmed organism may attach. The substrate may comprise a sheet of soil or soil-like material.

The tray may be configured to guide fluid received by the fluid entry portion such that the fluid is absorbed within the substrate prior to expelling the fluid from the fluid exit portion. In this manner, fluid can be guided to a farmed organism more effectively, via the substrate. As a result, the fluid may interact with the substrate and carry nutrients present in the substrate to the farmed organism. The substrate may gradually release fluid to be received by the farmed organism and therefore provide a regulation function. The substrate may contribute to environmental or thermal management. The substrate and/or the tray may be arranged such that only a portion of fluid received by the fluid entry portion may be absorbed by the substrate. In some examples, the substrate may be provided between the fluid entry portion and the fluid exit portion.

The tray may comprise a securing mechanism configured to position and secure (inhibit movement of) the tray within an interior space of the container. The securing mechanism may enable the tray to be securely positioned within a container, and therefore easily manipulated within an automated storage and retrieval system. The securing mechanism may comprise any suitable mechanism that provides this function. In this way, the securing mechanism may be seen as a counterpart or analogue of the tray fixation mechanism of the container. Indeed, in some examples, the securing mechanism of the tray may be configured to be received by a tray fixation mechanism of a container. The securing mechanism may thereby synergise with (e.g. provide or enhance any of the effects of) the tray fixation mechanism and vice versa.

The securing mechanism may comprise a flexible portion, for example a flexible hook, and/or a flexible string, and/or a portion of the tray configured to deform. As in the case of the tray fixation mechanism of the container, described above, the usage of a flexible portion in the securing mechanism of the tray may similarly lead to decreased manufacturing precision requirements (and/or increased tolerances), which leads to faster and/or more efficient manufacturing, and may negate the need to use high-precision manufacturing methods. For example, the tray may be moulded from a suitable material, without any need for post-processing.

The securing mechanism may comprise a protrusion on the tray. The protrusion may interact or otherwise engage with the container, for example with a fixation mechanism of the container, in order to provide better fixation of the tray within the container. For example, the protrusion may operate or engage a movable part of the tray fixation mechanism and/or may be adapted to slide or enter into a suitable opening or groove. The protrusion may alternatively or additionally interact with a flexible portion of the tray fixation mechanism of the container and thereby strengthen the effects of the tray fixation mechanism. For example, the protrusion may be configured to elastically deform a flexible portion on the container. The protrusion may be integral to the tray, which simplifies manufacturing.

The securing mechanism may comprise a deflectable portion that interacts with a suitable counterpart configured on a container. The securing mechanism may additionally or alternatively comprise one or more of: at least one magnet configured to secure and/or guide at least a part of a tray; at least one electromagnetic component configured to secure and/or guide at least a part of a tray, optionally wherein the at least one electromagnetic component is a switchable electromagnet; at least one actuator configured to secure and/or guide at least a part of a tray. The securing mechanism of the tray may be releasable, in other words may be configured to allow removal from the tray fixation mechanism of a container. For example, the securing mechanism may allow the tray to be pulled out when (enough) pulling force is applied, and/or may comprise operable features (e.g. a clasp or switch) that, when operated, allow the tray to be pulled out.

The tray may comprise first and second parts. This arrangement may enable easier manufacture and assembly of the tray. For example, instead of manufacturing the tray as a single indivisible item, the tray may be assembled from a kit of parts, which may be transported and stored in a disassembled state and assembled only when needed. The first and second parts may be configured to hold a substrate configured to support the growth of the farmed organism therebetween. A tray arrangement having two or more parts in this manner may enable easier access to a farmed organism and/or substrate positioned inside or between the two parts. For example, a vehicle and/or an operator may disassemble and/or open the tray to remove, add, and/or manipulate the substrate and/or farmed organism. Advantageously, the first and second tray parts may be detachably connected (e.g. using a clasp or latch), such that the tray can be disassembled and reassembled each time it is desired to replace or manipulate the substrate and/or farmed organism held therein.

The first and the second part may be essentially identical or essentially symmetrical, which would simplify manufacture of the tray. Alternatively, the first and second parts may be asymmetrical and/or substantially different. This may be advantageous because, by having different first and second parts, one may manufacture trays that allow access or growth from only one direction, which may improve confinement of a farmed organism and/or vehicle access and/or reduce the chance of contamination due to uncontrolled growth.

### Kit of parts to form a tray

In a third aspect, the present disclosure provides a kit of parts suitable to be assembled to form a tray as described in connection with the second aspect. Further to all the benefits of the tray described in connection with the second aspect, the kit of parts may be easier to manufacture, store, manipulate and/or distribute compared to a fully assembled tray. The kit of parts may comprise two parts that can be joined together to form the tray, in the manner described above. The kit of parts may also comprise more than two parts.

The kit of parts may comprise a feature that guides a human operator or a machine while assembling the kit of parts. Therefore, the kit of part may be assembled in a more effective manner. For example, the kit of parts may comprise a color-coded part, or may comprise a tactile feature on a part, or a part may comprise an instruction or a label engraved, imprinted, attached, and/or otherwise marked upon said part. A part in the kit of parts may comprise a machine-identifiable label, for example a QR code, which may enable easier part identification and/or assembly. For example, a machine-identifiable label may enable precise part identification during assembly.

### System for vertical farming

In a fourth aspect, the present disclosure provides a system for vertical farming in an automated storage and retrieval system, comprising a container and a tray secured within the container. The container may be as described anywhere herein. For example, the container may be the container of the first aspect described above. The tray may similarly be as described anywhere herein. For example, the tray may be the tray of the second aspect described above.

The system of the fourth aspect provides a combination of any and all of the benefits of the container and the tray. The system provides an integrated solution for vertical farming in an automated storage and retrieval system that is easy to manipulate, possibly using a vehicle or a robot. The system provides efficient fluid management, leading to reduction of spillage and dripping, which in turn enables less fluid to be used in the vertical farm.

The tray may be secured in the container by a tray fixation mechanism of the container, by a securing mechanism of the tray, or by a combination of the two. Irrespective of how the tray and container are secured together, the tray and the container may be connected in a permanent (or essentially permanent) or a detachable manner. A detachable connection is to be understood as one where the tray may be inserted into the container and then subsequently removed from it. This improves versatility and allows the tray to be reused more easily. An (essentially) permanent connection is to be understood as one where the container and the tray are not intended to be disconnected after attachment. For example, the tray may be fused, glued, welded, or brazed into the container. While less versatile, such a connection may simplify initial manufacture of, for example, the tray fixation mechanism. More generally, it will be appreciated that the tray and the container may be connected in any way described or implied elsewhere in this disclosure.

The system may comprise a plurality of trays as described herein, for example a plurality of trays according to the second aspect, stored within the same container. This arrangement may increase space utilisation. The plurality of trays may fill essentially the entire interior space of the container, which would maximise space utilisation within the container. The trays of the plurality of trays may be spaced apart from each other. For example, the trays may be spaced apart well enough to enable vertical air flow, for example by leaving a gap whose width corresponds to at least 5% of the width of the tray. To give another illustrative example, the trays may be spaced apart well enough to provide separation between farmed organisms in different trays, for example by using a low-enough number of trays (e.g., 3-5) and placing the trays so that they are uniformly spaced within the interior space of the container. A skilled person may choose or adapt the details of tray spacing taking into account at least some of the following: the dimensions of the container, the dimensions of the tray, details of the farmed organisms, details of the automated storage and retrieval system and/or the desired result to be achieved by spacing. A skilled person may refine the spacing arrangement using straightforward experimentation (e.g., they may configure the system with a chosen spacing, try it out and adapt accordingly).

It will be appreciated that, when a plurality of trays is provided within a container, not every tray need necessarily be (directly) secured by the container. For example, one or more trays of the plurality of trays may be connected to, or secured by/to, a different tray. This example allows multiple trays to be provided in the same container without requiring the same fixation mechanism to be provided for each tray. To give a concrete example, a subset of the trays may be held by a (respective) fixation mechanism on the container and all the other trays may be secured to that subset via a different connection or securing mechanism. More generally, it will be appreciated that any tray from the plurality of trays may be connected to the container or to a different tray using any of the connection mechanisms described herein.

### Method for vertical farming

In a fifth aspect, the present disclosure provides a method for vertical farming in an automated storage and retrieval system, the method comprising the steps of: receiving a first volume of fluid by a first farming system, wherein the first farming system is configured as described in connection with the fourth aspect; guiding the first volume of fluid towards a first farmed organism supported by a tray held within the first farming system; expelling at least a portion of the first volume of fluid from the tray of the first farming system; and receiving the expelled portion of fluid at a target location below the farming system. This method provides efficient fluid management and brings at least all the benefits of fluid management described above in respect of the tray and container.

The target location may comprise at least one of: a tray supporting a second farmed organism, optionally a fluid entry portion of said tray; a container, optionally wherein the first farming system is stacked on the container; or a vehicle in the automated storage and retrieval system. More generally, the target location may comprise any features or attributes of any target location described elsewhere in this disclosure.

The method may be such that, prior to being expelled from the first farming system, the at least a portion of the first volume of fluid is confined within the tray of the first farming system. This enables a more efficient fluid management by preventing spillage and dripping as described above in relation to the second aspect.

The method may be such that the tray of the first farming system comprises a substrate, and the tray may be configured to guide fluid received by the fluid entry portion such that the fluid is absorbed within the substrate prior to expelling at least a portion of the fluid from the fluid exit portion. This may further improve fluid management, prevent accidental spillage and dripping, and/or enable better support for a farmed organism as also described above in relation to the second aspect. For example, fluid may be absorbed by a substrate, wherein it becomes enriched with soluble nutrients, pharmaceuticals, or any other suitable substance, and this enriched fluid may be used to support or feed the farmed organism, prior to being expelled from the fluid exit portion.

### Description of examples shown in figures

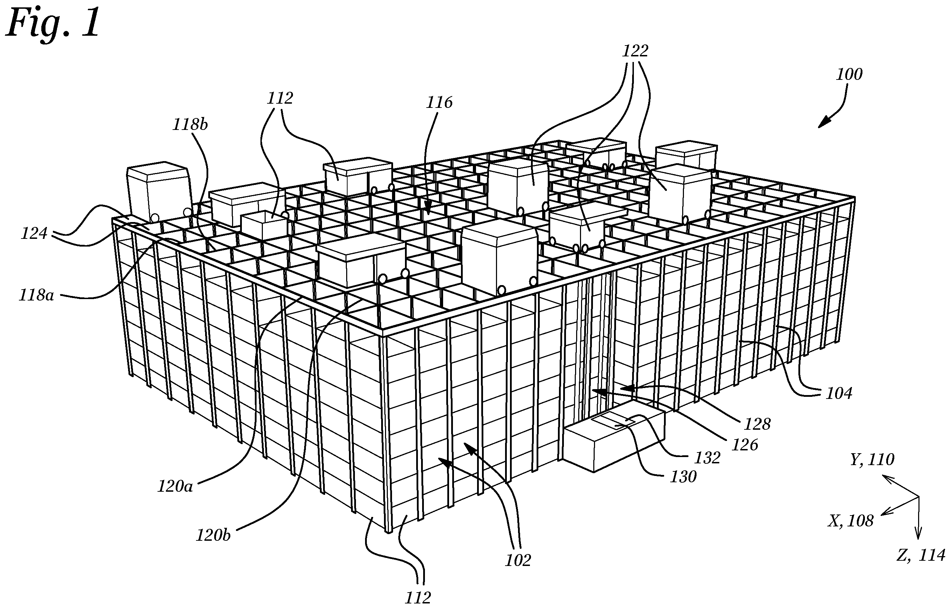

Figs. 1-10 provide illustrative drawings to further aid understanding of the content and context of the present disclosure. Accordingly, the particular examples shown in Figs. 1-10 are not intended to be restrictive.

### Figs. 1-3 - Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers (also referred to as "bins") 112 are stacked on top of each other, preferably in a self-supporting manner, in the Z direction 114 in the columns 102, forming a storage volume of storage cells for respective storage containers 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport storage containers 112 in both the X and Y directions 108, 110. The robots 122 are additionally configured to lift and lower storage containers 112 from/into the columns 102 in the Z direction 114, the storage containers 112 optionally being guided by the vertical frame members 104. The robots 122 access the storage containers 112 via access openings 124 above the columns 102 and formed between the rails 118, 120.

Some columns 102 may be used for alternative purposes than storage container storage. For example, port columns 126, 128 comprise port or access columns allowing transfer of a storage container 112 in and/or out of the grid 100. Port columns 126, 128 provide a vertical channel for lifting of a storage container 112 from, or lowering of a storage container 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') storage containers 112 from/to the grid 100. The ports 130, 132 are therefore configured to allow storage containers 112 to be removed and reintroduced (horizontally) into the associated port column. As such, a port 130, 132 can comprise a conveyor (not shown in Fig. 1) onto which a storage container 112 may be lowered and transported horizontally out of the port column. The port columns 126, 128 include an opening or access point through which storage containers 112 can enter and leave the column.

Storage containers 112 can be transported along the top of the grid 100 to and/or from a port column 126, 128 by robots 122, and from a port 130, 132 to a location outside the grid 100, which may be an access station (not shown) for processing of the storage container 112 or its contents, such as a picking station for adding content to, or removing content from, the storage container 112. In alternative examples (not shown), the storage container 112 may be transported to a port of another grid on the same or another level, or to an external facility. Transport of storage containers 112 to and from ports 130, 132 may be by any appropriate means (not shown) including conveyors, transport vehicles, lifts or robots.

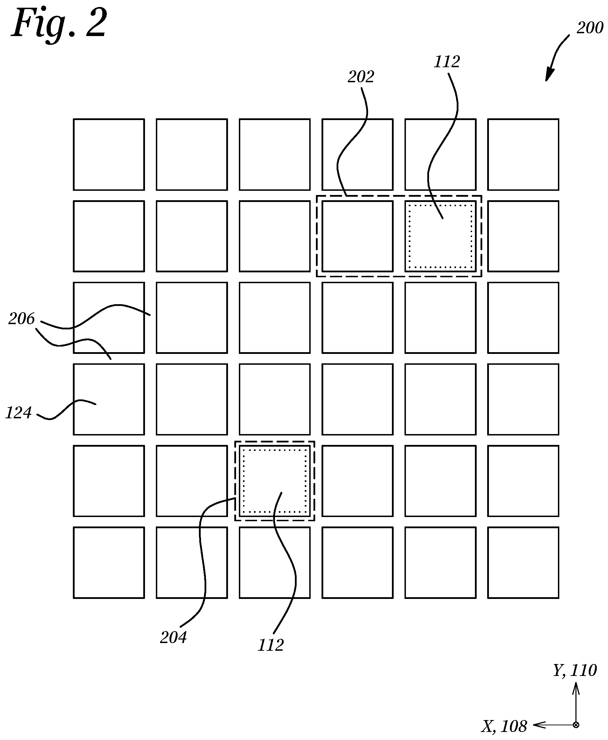

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to storage containers 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

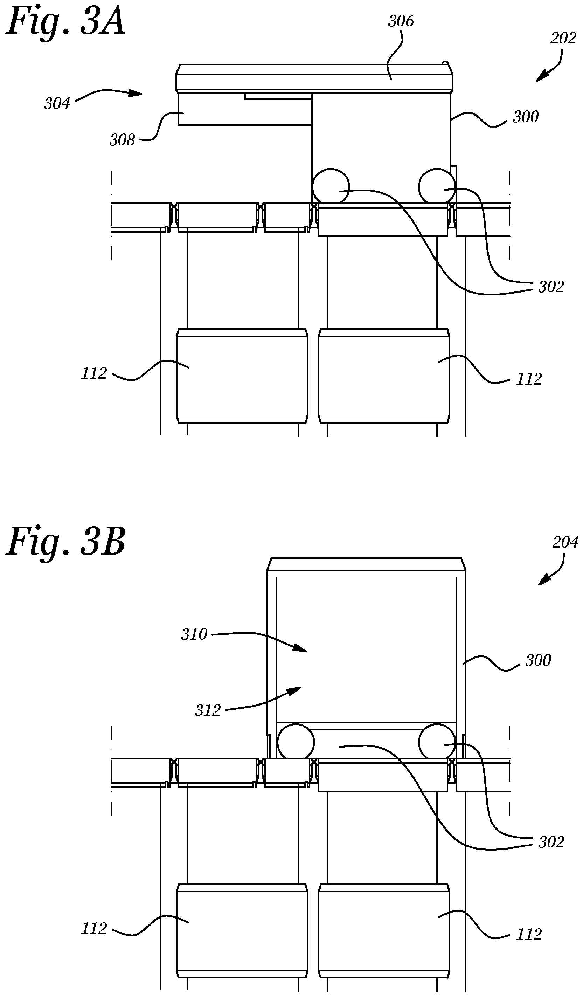

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a storage container 112; for example, by gripping a part of the storage container 112, or by passively or actively engaging a suitably configured part of the storage container 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more storage containers 112, for use, for example, while transporting the storage container 112.

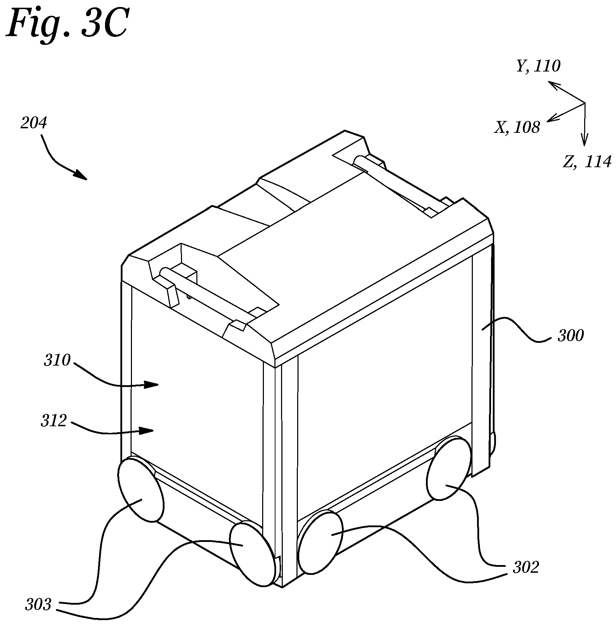

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Operation of an automated storage and retrieval system

In operation, each storage container 112 is given a unique identifier, which may be marked on the storage container 112 using a computer-readable identifier (e.g., a barcode, quick-response code or radio-frequency identification tag) to ease identification of the storage container 112. A processing system may be present. A database of the processing system may store, in association with the unique identifier, the position and, optionally, content of each storage container 112. When a storage container 112 is moved (e.g., when it is retrieved from the grid 100), the database may be updated to record its change in position.

When it is desired to retrieve a storage container 112 from the grid 100, for example under control of the processing system, a robot 202, 204 is routed via the rail system 116 to the vertical column 102 including the storage cell where the storage container 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the storage container 112 to the robot 202, 204. The robot 202, 204 then transports the storage container 112, for example, to the drop-off port column 126, 128 for delivery to the port 130, 132 and subsequent processing external to the grid 100. In the event that the target or designated storage container 112 is below other storage containers in the stack then the robot 202, 204 or multiple robots, which may be dedicated to the task, are controlled in a 'digging' operation to sequentially lift and reposition, temporarily or permanently, storage containers above the target storage container 112 in order for it to be retrieved. It will be appreciated that other operations in relation to the storage container 112 can be carried out in a similar manner. For example, a storage container 112 can be delivered for storage in the grid 100 at the port 130, 132 of the pick-up port column 126, 128, gripped and lifted by a robot 202, 204 and delivered to the desired storage cell, storage containers above the desired position being repositioned if necessary as discussed above.

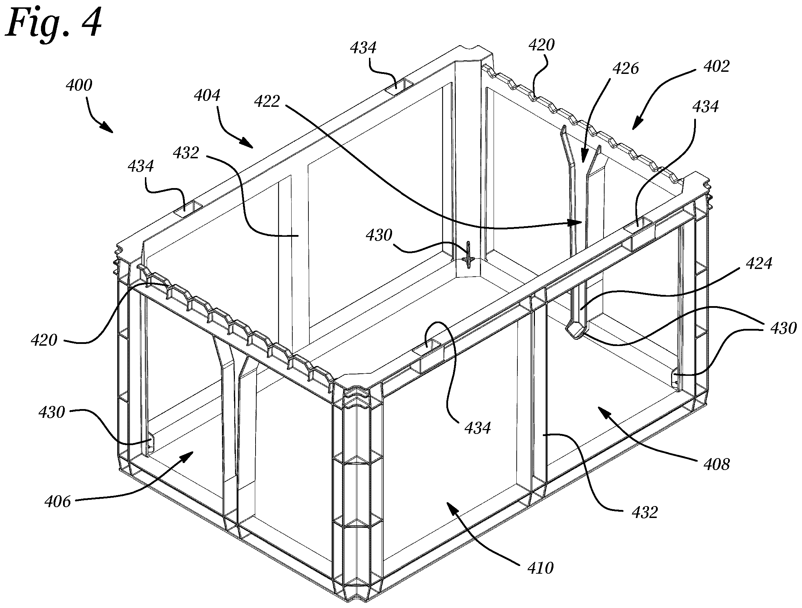

### Fig. 4 - a container

Fig. 4 shows a perspective view of an example container 400 according to the present disclosure. The container 400 is particularly suited for enabling vertical farming in an automated storage and retrieval system such as that just described with respect to Figs. 1-3C.

The container 400 may be manipulated in the same way as any storage container 112 in the automated storage and retrieval system. In particular, container 400 can be placed in columns 102 within grid 100 and can be transported to or from ports 130, 132, where it can be dropped-off or picked-up in the manner described above.

Container 400 may be manipulated using a robot 202,204, or multiple robots, in any way that a storage container 112 may be manipulated. The unique identifiers and/or the database related to a storage container 112 may be applied to container 400 and may be expanded, modified, or adapted to carry any additional information useful in the context of vertical farming (for example, details and/or manipulation history of a farmed organism).

Alternatively, or in addition to these standard modes of operation, the robot 202, 204 may be configured to carry out operations specific to vertical farming in respect of container 400. For example, the robot 202, 204 may comprise a harvesting device, which may operate in a similar manner to the lifting device 304 and/or gripping device 308. In some examples, the robot 202, 204 may be configured to provide or remove fluids from container 400. The robot 202, 204 may be also adapted to carry out sanitation tasks, such as cleaning and/or contamination control. More generally, the robot 202, 204 may be configured to carry out any action described elsewhere in this disclosure that may be carried out by a robot, a vehicle, or a human operator.

The robot 202, 204 may be configured to adapt its modes of operation to the context of vertical farming. For example, it may slow down (relative to its standard operation speed) when transporting a farmed organism and/or it may utilise alternative path-finding algorithms that minimise the chance of interfering with the vertical farming systems and/or contaminating the farmed organisms.

Turning now to the structure of the example container 400 of Fig. 4, the container 400 comprises a frame defining a base 410 and side walls 402, 404, 406, 408 upwardly extending from the base 410. As can be seen, the base and side walls define an interior space of the container, which can also be considered as the volume of the container. In Fig. 4, the container 400, in particular its base 410 and side walls 402, 404, 406, 408, delineate essentially a rectangular cuboid. However, it will be appreciated that container 400, along with its base 410 and side walls 402, 404, 406, 408 may also delineate a different parallelepiped or a shape similar to a parallelepiped. It should be understood that the exact shape delineated by the container is not essential, as long as it is suitable for use in an automated storage and retrieval system (e.g., it is stackable and/or structurally resilient and/or encircles the interior space).

The base 410 and side walls 402, 404, 406, 408 of the example container 400 of Fig. 4 are mostly devoid of material. In particular, other than the frame defining the edges of the container and support members 432 (described in more detail below), the base 410 and side walls 402, 404, 406, 408 are open. This is advantageous because the container 400 thereby increases the amount of light and airflow that can enter the container 400 and reach any farmed organism provided therein. It will be apparent, however, that the base 410 and side walls 402, 404, 406, 408 may in other examples be less open and in some cases may comprise a mesh, grating or solid material.

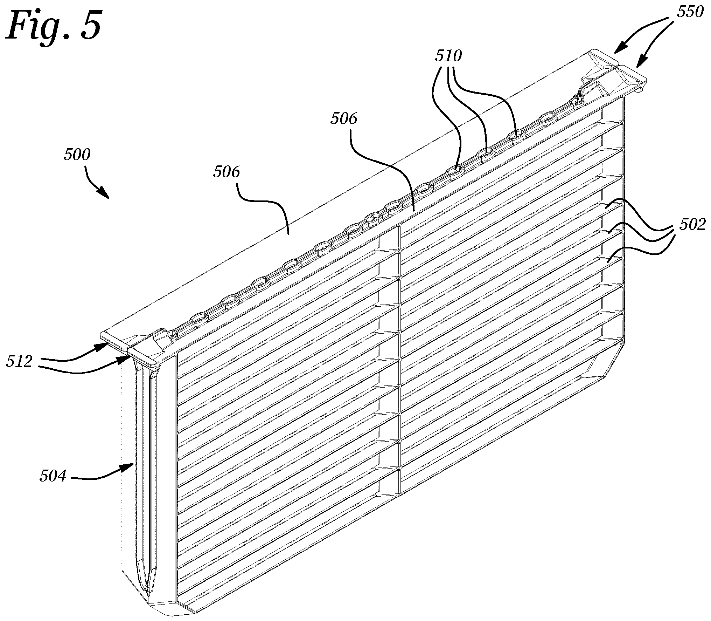

The container 400 further comprises a tray fixation mechanism configured to receive and inhibit movement of a tray within the interior space of the container. Where the tray received by the container 400 is configured to support a farmed organism, the container can thereby be used to support a vertical farm in the automated storage and retrieval system. Details of an example tray for use within container 400 will be described below in relation to Figs. 5-7.

In the particular example shown in Fig. 4, the tray fixation mechanism comprises a flexible portion 424 configured to deform (e.g. elastically) in response to insertion of a tray and thereby exert pressure on and inhibit movement of the tray. In other words, the flexile portion 424 may grip the portion of the tray provided therein to secure the tray in container 400. The tray fixation mechanism in this example also comprises a plurality of coupling portions 420, which are configured to couple to a respective portion of a tray, such as a catch or protrusion of the tray. This will be explained in further detail below with reference to Figs. 5-9.

It will be appreciated that other arrangements of the tray fixation mechanism are possible. For example, while in Fig. 4 the flexible portion 424 is placed near the base 410 of the container, it may be placed elsewhere on the container. The flexible portion 424 may also comprise flexible hooks or other features not shown in Fig. 4. Also, while the container 400 in Fig. 4 comprises tray fixation mechanisms provided symmetrically at either side 402, 406, of the container, this is optional and other arrangements are possible. In this example, the flexible portions 424 and coupling portions 420 of the tray fixation mechanisms are integral with the frame, however as described elsewhere in this disclosure the features of the tray fixation mechanism may alternatively be in addition to (i.e. not integral with) the frame. It will be appreciated that in some examples there may be more or fewer or none of either flexible portion 424 or coupling portion 420. In some examples, no tray fixation mechanism may be provided on the container 400 and the securing of a tray within the container may be performed solely by a feature of the tray.

The example container 400 in Fig. 4 also comprises a tray guiding portion 422 configured to guide at least a portion of the tray towards the flexible portion 424. In this example the tray guiding portion 422 comprises a first groove.

Container 400 also comprises a tray entry portion 426. The tray entry portion 426 guides a received tray towards the tray guiding portion 422. In this example the tray entry portion 426 comprises a second groove having a tapered shape. The tapered shape means that it is simpler to place or insert a tray into the tray guiding portion 426. In general, however, the tray entry portion 426 need not be tapered, and it need not be connected directly to the tray guiding portion 422. Similarly, while the tray entry and guiding portions 426, 422 are made from a connected piece of material in the illustrative example shown in Fig. 4, this need not be the case and other arrangements are possible.

The example container 400 of Fig. 4 also comprises multiple fluid conduits 430 configured to guide collected fluid towards a target location below the container. These fluid conduits 430 may be particularly suited for expelling excess fluid in a controlled manner to a desired location. As shown in Fig. 4, possible locations for a fluid conduit 430 comprise the bottom of a tray fixation mechanism, or an edge of the container 400. For example, the fluid conduit 430 configured at the bottom of the tray fixation mechanism may guide any fluid that reaches the fixation mechanism in a controlled manner through the base 410 of the container 400. A fluid conduit 430 configured at the bottom of the container 400 may similarly collect and expel any fluid that reaches the frame at that location. A fluid conduit 430 may be supplemented by any means that may help guide fluids, for example a surface structure such as a rib or a groove, surface treatment, and/or coating.

Container 400 also comprises support members 432 configured to provide structural support and improve loading capacity of the container 400. In this example, support members 432 comprise an additional piece of framework provided in sides 404 and 408 of container 400 that supplement the existing framework and strengthen container 400. Support members 432 are distinct from the other elements of the frame of the container in that support members 432 do not define the edges of the container but rather are additional elements configured to provide additional support. It will be appreciated that, while support members 432 in Fig. 4 are vertical elements in side walls 404 and 408, support members 432 can additionally or alternatively be configured diagonally or horizontally, or within the interior space.

Container 400 further comprises multiple interface features 434 configured to enable a vehicle of the automated storage and retrieval system to interact with the container. These interface features 434 enable a gripping device, such as gripping device 308 described with reference to Fig. 3A, to lift and lower the container 400 into and out of a storage grid 100 and thereby enable automated handling of container 400.

At least one of the interface features 434 may additionally or alternatively be configured to interface with at least one stacking portion of another container 400, for example another container 400 stacked above or below the present container 400. Through coupling of an interface feature 434 with a stacking portion of another container, relative movement of the two containers can be inhibited. In a particular example, a container 400 may be equipped with protrusions on the outer side of its base, which, when stacked, interact with interface features 434 configured on another container below it. While Fig. 4 shows examples interface features 434 configured on the top part of the frame (i.e., outer part of the frame distant from the base), they may be also configured elsewhere on container 400.

It will be appreciated that the features illustrated using Fig. 4 provide advantages and admit of variations as described elsewhere in this disclosure.

### Figs. 5-7 - a tray

Turning now to Figs. 5-7, an example tray for inserting into a container, such as container 400 of Fig. 4, is shown. Fig. 5 shows the assembled tray 500, which in this example is formed of two parts 550 connected together. It will be appreciated that the parts 550 may be connected in any suitable manner, for example using clasps or fasteners. By providing a tray 500 formed of two (or more) parts in this way, the tray 500 can be easily assembled and, in examples where the coupling between parts 550 is releasable, also disassembled. In the example shown in Fig. 5, the parts 550 are configured to hold a substrate configured to support the growth of a farmed organism therebetween. In particular, the first and second parts 550 are configured to be opened or disconnected, so that the substrate and/or a farmed organism may be inserted into or otherwise manipulated within the tray 500. When it is desired to modify, remove, or replace the substrate or farmed organism, the parts 550 can again be disconnected to allow easy access to the interior of the tray 500.

In this example, the parts 550 are symmetrical and may therefore be considered as respective halves of the tray 500, however it will be appreciated that other examples are possible and that the parts 550 may be asymmetrical. The parts 550 may be provided as a kit of parts suitable to be assembled to form tray 500, as described in more detail elsewhere in this disclosure. Such a kit of parts may be assembled using a robot 202, 204 or by a human operator. In alternative examples, the tray 500 may be formed of a single piece.

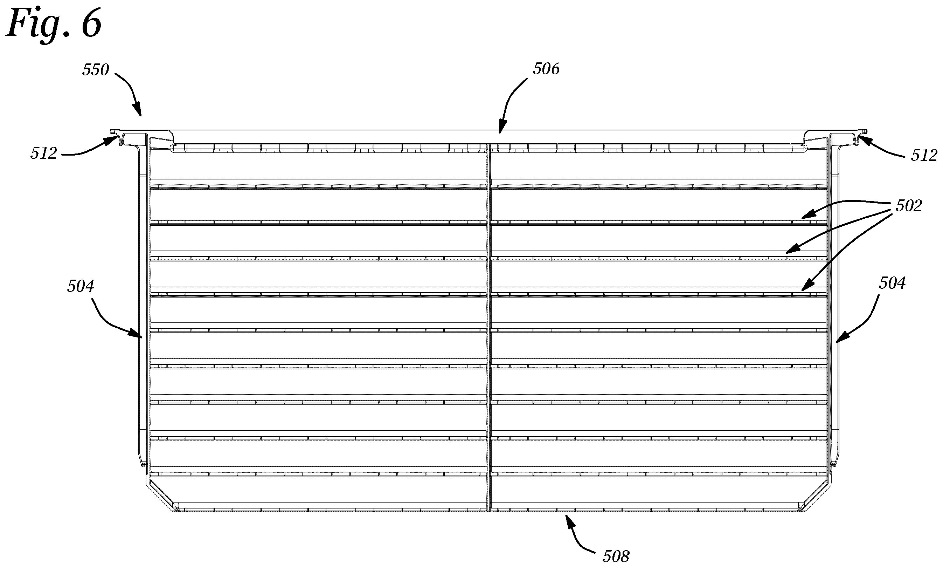

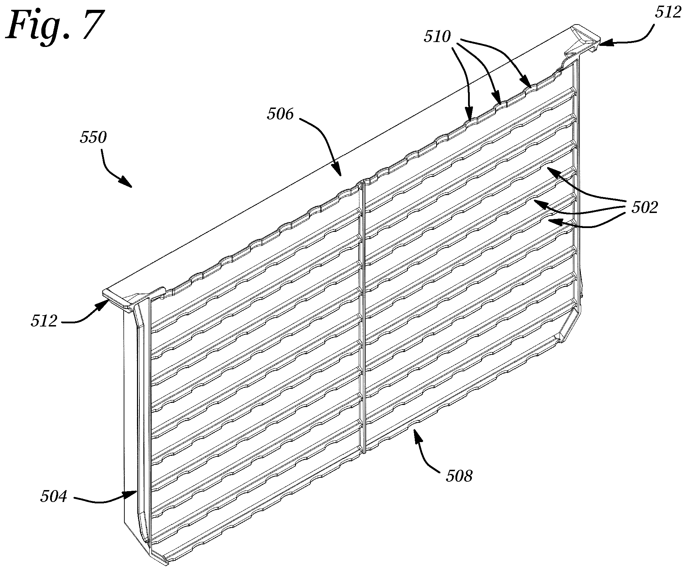

Figs. 6 and 7 show one part 550 (half) of tray 500 from a side-on and perspective view respectively, with the inner face visible to better illustrate the internal structure of the tray part 550.

In this example, each part 550 comprises (a part of) a support structure configured to support a farmed organism. In the particular example shown in Figs. 5-7, the support structure comprises a plurality of shelves or platforms 502 on which farmed organisms can be provided and can grow. For example, a farmed organism may be a plant, initially introduced into the tray 500 as a seed, and may grow on or over one of the platforms 502 of the support structure. Alternatively or additionally, the farmed organism may be introduced on and/or within a substrate that is supported by (e.g. held in place by) the support structure. The support structure provides the farmed plant with a space where it can develop any of its organs (e.g., root system, stems, foliage etc.). In some examples, the support structure may be (significantly) different from the support structure shown in Figs. 5-7. For example, it may comprise a compartment, pouch, frame, Petri dish or any other structure that may support a farmed organism within the tray 500. Given the significantly different requirements for cultivation of different organisms, it is to be understood that the example support structure shown in Figs. 5-7 is merely a non-limiting illustration.

The example tray 500 further comprises features to enable improved flow of fluids, including improved airflow. In the present example, these features include a fluid entry portion 506, fluid exit portion 508, and fluid openings 510. These features will now be described in turn.

Turning first to the fluid entry portion 506, the example fluid entry portion (shown most clearly in Figs. 5 and 7) comprises a sloped surface on each tray part 550 which slopes downward from an outer edge of the tray part 550 to the centre of the tray 500 (when assembled). When assembled, the tray 500 therefore comprises two such surfaces that act as a funnel to catch liquid falling on the tray from above and guide the liquid toward the centre of the tray 500. In the example shown, the fluid entry portion 506 is configured at the top of the tray 500 and covers substantially the entire width of the tray 500, however it will be appreciated that other arrangements are possible.

Turning next to the fluid exit portion 508, this portion is configured to guide fluid leaving the tray, such as excess fluid that has not been absorbed by a farmed organism, toward a target location. In the example of Figs. 5-7 the fluid exit portion 508 comprises a plurality of openings provided at the bottom of each tray part 550 through which (excess) fluid can exit the tray 500 in a controlled manner. In the example shown, the tray 500 tapers and is narrower towards the bottom. As a result, the fluid exit portion 508 is provided at the narrowest part of the tray 500, which further improves the control of fluid flow by channelling fluid towards this specific part of the tray 500 for expulsion.

Turning finally to fluid openings 510, the tray 500 further comprises a plurality of such opening 510 to allow fluids to enter and move through the interior of the tray 550 more effectively. In this example, the openings 510 are provided throughout the fluid entry portion 506 and each platform 502 of the tray. In this example, the openings 510 are provided across essentially the entire width of the tray 500 and enable fluids to flow vertically within the tray. In this example, a part of each opening is provided in each tray part 550, such that when the tray parts 550 are assembled the openings 510 are formed between the tray parts 550. It will be appreciated that other arrangements of openings 510 are possible, however.

Both liquid fluids entering the tray via the liquid entry portion 506 and gasses such as air can traverse through openings 510 in order to move through the tray 500. Accordingly, the openings 510 improve both liquid and air flow in the tray, improving growing conditions for the farmed organism. In the case of fluid provided to the tray 500, the fluid may be guided from the fluid entry portion 506 to the nearest platform 502 comprised in the support structure , where it may interact with a farmed organism located at or on that platform 502. The fluid may then flow down using any of the openings 510 in the first platform 502 and keep progressing in this manner until the fluid has reached all of the platforms 502 and farmed organisms held within the tray 500. Excess fluid (e.g. fluid not absorbed by a farmed organism or substrate within the tray 500) may then reach the fluid exit portion 508 and be expelled from the tray 500.

In this example, tray 500 also comprises a securing mechanism configured to secure (e.g. position and inhibit movement of) the tray 500 within an interior space of a container, such as container 400 of Fig. 4. In the present example, a symmetrical part of the securing mechanism is provided on each part (half) 550 of the tray 500, however it will be appreciated that other arrangements are possible.

In this example, the securing mechanism comprises a tapered portion 504 and a latching portion or mechanism 512. The tapered portion 504 is shaped and configured for interfacing with the tray guiding portion 422 and flexible portion 424 of container 400 described above with respect to Fig. 4. In particular, the tapered portion 504 comprises a tapered protrusion that is configured to slide into the groove of the tray guiding portion 422 and be held by the flexible portion 424. The latching portion 512 is similarly shaped and configured for interfacing with a coupling portion 420 of container 400 described above with respect to Fig. 4. In this example, latching portion 512 comprises a latching mechanism configured to latch over and grip a coupling portion 420. Through provision of a tray securing mechanism, in this example embodied by tapered portion 504 and latching portion 512, the tray 500 can be easily inserted into and secured within a container 400.

It will be appreciated that other arrangements of the securing mechanism of the tray are possible. For example, while the tray 500 in Figs. 5-7 comprises a securing mechanism at either side of the tray, this is optional and other arrangements are possible. It will be appreciated that in some examples there may be more, fewer, or none of either tapered portion 504 or latching portion 512. The securing mechanism may also comprise other features not shown in Figs. 5-7. In some examples, no securing mechanism may be provided on the tray and the securing may be performed solely by a feature of the container 400.

Robots 202, 204 may manipulate one or more trays 500, similarly to how they would manipulate a storage container 112 or a container 400. Other parts of an automated storage and retrieval system, such as ports 130, 132, may be also adapted to operate directly with trays. In particular, a robot 202, 204 may transport a tray 500 to/from a port 130, 132 for drop-off or pick-up.

A robot 202, 204 may be adapted for specific manipulation of a tray 500, for example it may be adapted to assemble a tray 500 from a kit of parts 550, place a tray 500 in a container 400, remove a tray 500 from a container 400, and/or carry out any other tray-related manipulation tasks described elsewhere in this disclosure.

It will be appreciated that the features illustrated using Figs. 5-7 provide advantages and admit of variations as described elsewhere in this disclosure.

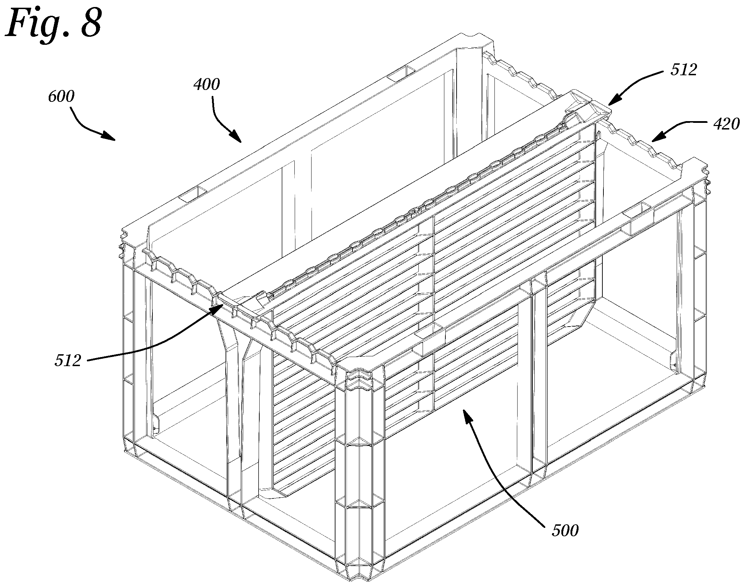

### Figs. 8-9 - a system

Fig. 8 shows a perspective view of an example system 600 for vertical farming in an automated storage and retrieval system, comprising a container 400 as described with reference to Fig. 4 and a tray 500 as described with reference to Figs. 5-7. In the particular example shown in Fig. 8, the securing mechanism of tray 500 is secured in the tray fixation mechanism of the container. More specifically, at each side of the tray, tapered portion 504 is received and secured in tray guiding portion 422 and flexible portion 424. Similarly, each latching portion 512 is latched over and secured to coupling portion 420.

System 600 may be assembled (e.g. by a robot 202, 204) by placing tray 500 into container 400. In the present example, this process may comprise pushing the tray 500 into the flexible portion 424 such that it is gripped by flexible portion 424 and causing latching mechanism 512 to secure to (e.g. latch or clip over) a corresponding coupling portion 420 of the container 400.

System 600 enables the tray 500 to be efficiently handled within an automated storage and retrieval system, for example using a vehicle or a robot 202, 204 within a grid 100 as described above. In particular, following insertion of tray 500 into container 400, the resulting system 600 may be placed into an appropriate position within the grid 100 by a robot or a vehicle 202, 204. If it is desired to access tray 500, the system 600 can then be similarly removed from the grid 100. Other operating procedures are of course also possible. For example, the tray 500 may be received by the container 400 to form the system 600 while the container is already in position within the automated storage and retrieval system. Similarly, instead of removing the entire system 600 when it is desired to remove tray 500, in some examples only the tray 500 may be manipulated or removed without removing the container 400. It will be appreciated that the exact operating protocol will depend on the specific details of the automated storage and retrieval system.

Once in position, the tray 500 of the system 600 may receive and expel fluids in the manner described above in order to feed, nurture or otherwise support a farmed organism growing in/on the tray 500. While in position, a robot 202, 204 may also manipulate (e.g., harvest, introduce, remove, treat, ...) the farmed organism. If the required manipulation necessitates removal of the system 600 from its position, it may be removed by a robot 202, 204 in the manner described above.

Due to the stackable nature of the container 400, multiple systems 600 as shown in Fig. 8 may be positioned in a stack, similarly to the stacks of containers 112 in grid 100 described in reference to Fig. 1. This provides efficient storage for trays 500 and also enables improved fluid management because the fluid entry portion 506 and fluid exit portion 508 of the trays 500 enable fluid flow to be directed, for example from one tray 500 to a target location (e.g. another tray) below.

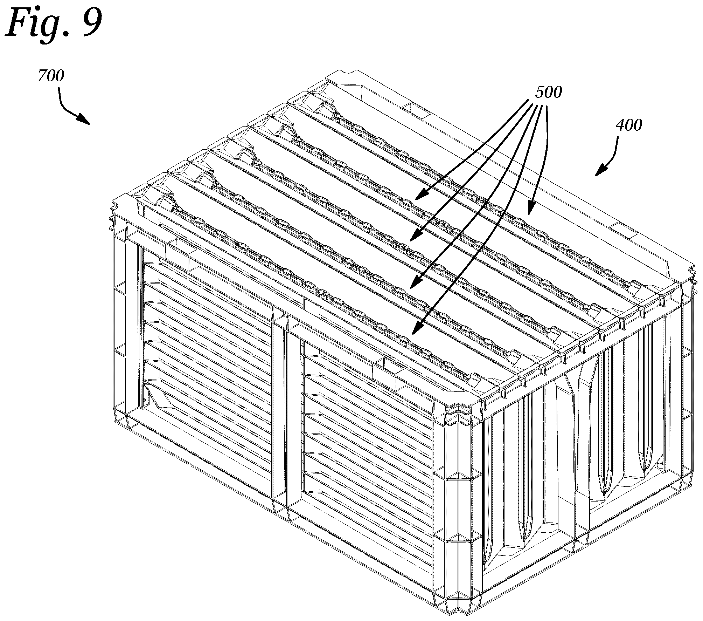

Fig. 9 shows a perspective view of an example multi-tray system 700 for vertical farming in an automated storage and retrieval system. System 700 in this example comprises the same features as the system 600 of Fig. 6, however in this case the system 700 comprises a plurality of trays 500. In the example shown in Fig. 9, only the central tray 500 is secured in a tray guiding portion 422 and flexible portion 424 of the container 400. The other trays 500 are secured in place through their proximity to one another and via their respective latching mechanisms 512 coupling to coupling portions 420 of the container 400. However, it will be appreciated that this is merely one example and in other examples each tray may be secured by its own tray guiding portion 422 and flexible portion 424 or some other combination of securing mechanisms 504, 512.

The operating procedures and the benefits described in connection with the single-tray system 600 described in Fig. 8 apply similarly to the multi-tray system 700 shown in Fig. 9.

It will be appreciated that one benefit of a system 700 with a plurality of trays 500 such as that shown in Fig. 9 is that the combined surface area of the fluid entry portions 506 of the trays 500 is increased relative to that of a single tray, which provides a greater surface area over which fluid falling on the system 700 can be captured and put to use. Another benefit is that, as will be apparent from Fig. 9, a plurality of trays 500 can be efficiently stored and/or moved together in a single container 400.

Containers 400 and systems 600, 700 described in this disclosure may possess any and all of the attributes and features of a storage container 112 described above with reference to Figs. 1-3C. It will be appreciated that this advantageously means that containers 400 and systems 600, 700 can be easily incorporated into existing automated storage and retrieval systems.

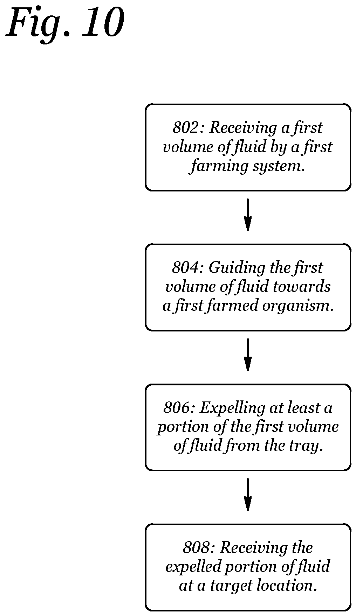

### Fig. 10 - a method

Fig. 10 shows a flowchart of an example method for vertical farming in an automated storage and retrieval system. The method illustrated using Fig. 10 enables more effective fluid management by providing improved control of fluid and allowing for reuse of fluids.

At step 802, the method comprises receiving a first volume of fluid by a first farming system, such as system 600 or 700 described above in reference to Figs. 8 and 9. In some examples, fluid may reach the first farming system from another farming system, or from a source of fluid (e.g., a hose, sprinkler, pipe, or a reservoir). Advantageously, the fluid may be received directly by a fluid receiving portion of a tray of the first farming system, such as fluid receiving portion 506 of tray 500.

At step 804, the first volume of fluid is guided towards a first farmed organism supported by a tray held within the first farming system. In some examples, this step may comprise guiding the fluid using a system of one or more openings, pipes, channels, or other structures or features configured to guide fluids. For example, openings 510 of tray 500 described above with reference to Figs. 5-7 may be used for this purpose.

The first volume of fluid may be guided via or using a substrate. For example, the tray of the first farming system may comprise a substrate, and the tray may be configured to guide fluids received by the fluid entry portion such that the fluid is absorbed within the substrate and can thereby be provided to the farmed organism growing on/in the substrate.

After the first volume of fluid reaches the first farmed organism, the first farmed organism may interact with the fluid in any fitting manner. For example, if the first farmed organism is a plant or a fungus, it may absorb fluids or nutrients from the first volume of fluid using its root system (or other appropriate organ). If the farmed organism is an animal, the fluid may provide its required living environment, nutrients, and/or breathing gases. Specifically, if the farmed animal is an aquatic animal, the fluid may provide essential living environment.

At step 806, at least a portion of the first volume of fluid is expelled from the tray of the first farming system. This may happen passively (e.g., by action of gravity and/or adhesion) and/or using an active system (e.g., the fluid may be pushed or squirted out). The portion of fluid may comprise excess fluid not absorbed by the substrate or farmed organism and/or waste fluid.

At step 808, the expelled portion of fluid is received at a target location below the first farming system. It is to be appreciated that the phrase "below" is to be interpreted broadly herein and means simply that fluid expelled from the tray flows in the direction of the target system, for example under the action of gravity. The target location need not be directly underneath the tray, but could for example comprise a drain that is adjacent but nevertheless below the tray. The target location may be any target location described elsewhere in this disclosure, such as another farming system or fluid collection point. The expelled portion of fluid may be re-used or removed from circulation.

In addition or alternatively to providing nutrition to a farmed organism, the method shown in Fig. 10 may be also used to "flush" the tray and therefore manage possible contamination within the tray, or to influence the environment within said tray. In such examples, the method may be performed while the tray is empty, e.g. while no farmed organism is provided therein.

A robot 202, 204 may be adapted to cause the method of Fig. 10 to be carried out. For example, the robot 202, 204 may position a system 600, 700 in an appropriate way, or deliver the fluids to be received by a system 600, 700. A robot 202, 204 may also act as a target location for the fluid expelled at step 806.

It will be appreciated that this method and its steps may have attributes and effects as described elsewhere in this disclosure, and they may admit variations as described elsewhere in this disclosure.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The phrase "organism", used herein, should be understood broadly and should encompass any living matter and any matter capable of growth, metabolism, or reproduction, suitable to be farmed in an automated storage and retrieval system. The farmed organism referred to herein may be a plant (e.g. a fruit, vegetable or herb), a fungus, a bacterium, an animal, or any similar organism, or any item that may lead to reproduction and/or growth of these organisms, such as an egg, an embryo, a spore, a seed, a structure for vegetative reproduction, or any similar item. In general, the farmed organism may be any organism suitable for being farmed, grown, cultivated, or reproduced.

Additionally, it is to be understood that various organisms require different adaptations of the invention disclosed herein, based on, among others, their fluid/nutrition/light/airflow provision requirements, the structure of their organs, and other attributes apparent to a skilled person. For example, a system for growing plants may be different from a system adapted for growing mushrooms, or from a system for cultivation of bacteria, or for animals (e.g., aquaculture). These organism-specific details will be apparent to a person skilled in the appropriate sub-area of farming.

Likewise, it should be understood that the embodiments of the invention described in this disclosure may significantly vary in size. The size of these embodiments may depend on the farmed organism and/or details of the automated storage and retrieval system wherein the embodiments are being used. In general, any size scale on which it is feasible to provide a container may be appropriate for a particular embodiment of the invention disclosed herein.

In general, any of the aspects and examples of the present disclosure may be adapted for use in an automated storage and retrieval system as described in connection with Figs. 1-3C. It should be understood that the aspects and examples of the present disclosure may be interoperable with prior-art automated storage and retrieval systems.

It will be appreciated that references herein to actions such as "assembly", "disassembly", "removal", "insertion", "harvesting", "manipulation" and their derivatives, variants and/or more concrete examples may refer to actions carried out by a robot, a vehicle, or a human operator within the automated storage and retrieval assembly.

### Clauses

This disclosure comprises the following clauses:
1. A container for vertical farming in an automated storage and retrieval system, comprising:
   a frame defining a base and side walls upwardly extending from the base, the base and side walls defining an interior space; and
   a tray fixation mechanism configured to receive and secure a tray configured to support a farmed organism within the interior space.
2. The container of clause 1, further comprising a tray guiding portion configured to guide at least a portion of the tray towards the tray fixation mechanism, optionally wherein the tray guiding portion comprises a first groove.
3. The container of clause 2, further comprising a tray entry portion configured to receive the tray prior to the tray guiding portion and to guide the tray towards the tray guiding portion,
   optionally wherein the tray entry portion comprises a second groove,
   further optionally wherein the tray entry portion tapers towards the tray guiding portion.
4. The container of any preceding clause, wherein at least one of the tray fixation mechanism, tray guiding portion, and tray entry portion are integral with the frame.
5. The container of any preceding clause, wherein the tray fixation mechanism comprises a flexible portion configured to exert pressure on the received tray to thereby inhibit its movement.
6. The container of clause 5, wherein the flexible portion is configured to elastically deform upon receiving the tray.
7. The container of any preceding clause, wherein the container comprises a fluid conduit configured to guide collected fluid towards a target location below the container.
8. The container of clause 7, wherein the target location comprises one or more of: a fluid collection point, another container of the automated storage and retrieval system, and/or another tray configured to support a farmed organism.
9. The container of any preceding clause, wherein the frame comprises at least one support member configured to provide structural support to the container.
10. The container of any preceding clause, further comprising one or more interface features configured to enable a vehicle of the automated storage and retrieval system to interact with the container,
   optionally wherein the one or more interface features are configured to enable a vehicle of the automated storage and retrieval system to interact with the container from above.
11. The container of any preceding clause, wherein the frame comprises at least one stacking portion configured to inhibit relative movement of an additional container stacked above or below the container.
12. A tray for vertical farming in an automated storage and retrieval system, comprising:
   a support structure configured to support a farmed organism;
   a fluid entry portion configured to receive and guide fluid toward the support structure for providing to the farmed organism; and
   a fluid exit portion configured to expel excess fluid from the tray.
13. The tray of clause 12, wherein the fluid exit portion is configured to expel excess fluid from the tray towards a target location below the container, optionally wherein the target location comprises one or more of: a fluid collection point, another container of the automated storage and retrieval system, and/or another tray configured to support a farmed organism.
14. The tray of clause 12 or 13, wherein the fluid entry portion comprises a sloped portion, optionally a funnel.
15. The tray of any of clauses 12-14, wherein the tray comprises a securing mechanism configured to position and inhibit movement of the tray within an interior space of a container, optionally wherein the securing mechanism is configured to be received by a tray fixation mechanism of the container.
16. The tray of clause 15, wherein the securing mechanism comprises:
   a protrusion, optionally wherein the protrusion is tapered; and/or
   a latching portion configured to interface with a coupling portion of a container.
17. The tray of any of clauses 12-16, further comprising a substrate, supported by the support structure, configured to support the growth of the farmed organism.
18. The tray of any of clauses 12-17, wherein the support structure is configured to enable the farmed organism to grow in at least two directions.
19. The tray of any of clauses 12-18, wherein the tray is configured to provide access to the farmed organism from at least two directions,
   optionally wherein the support structure is configured to enable the farmed organism to be harvested by a vehicle of the automated storage and retrieval system from the at least two directions.
20. The tray of any of clauses 12-19, wherein the tray comprises first and second parts, optionally wherein the first and second parts are configured to hold a substrate configured to support the growth of the farmed organism therebetween.
21. The tray of any of clauses 12-20, wherein the tray is configured to confine fluid received by the fluid entry portion within the tray prior to expelling the fluid from the fluid exit portion.
22. The tray of clause 21, wherein the tray is configured to guide fluid received by the fluid entry portion such that, when a substrate is present in the tray, the fluid is absorbed within the substrate.
23. The tray of any of clauses 12-22, further comprising one or more openings, channels, or conduits within the tray configured to facilitate fluid flow through the interior of the tray.
24. A kit of parts suitable to be assembled to form the tray of any of clauses 12-23, optionally wherein the kit of parts comprises two parts that can be joined together to form the tray of any of clauses 12-23.
25. A system for vertical farming in an automated storage and retrieval system, comprising:
   a container comprising a frame defining a base and side walls upwardly extending from the base, the base and side walls defining an interior space; and
   a tray comprising:
      a support structure configured to support a farmed organism;
      a fluid entry portion configured to receive and guide fluid toward the support structure for providing to the farmed organism; and
      a fluid exit portion configured to expel excess fluid from the tray;
   wherein the tray is secured in the interior space of the container by a tray fixation mechanism of the container and/or a securing mechanism of the tray.
26. The system of clause 25, wherein the container is arranged as described in any of clauses 1-11 and/or wherein the tray is arranged as described in any of clauses 12-23.
27. The system of clause 25, comprising a plurality of trays, optionally wherein each tray is arranged as described in any of clauses 12-23 or clause 25.
28. A method for vertical farming in an automated storage and retrieval system, the method comprising:
   receiving a first volume of fluid by a first farming system, wherein the first farming system is configured as set out in any of clauses 25-27;
   guiding the first volume of fluid towards a first farmed organism supported by a tray held within the first farming system;
   expelling at least a portion of the first volume of fluid from the tray of the first farming system; and
   receiving the expelled portion of fluid at a target location below the farming system.
29. The method of clause 28, wherein the target location is at least one of:
   a tray supporting a second farmed organism, optionally a fluid entry portion of said tray;
   a container, optionally wherein the first farming system is stacked on the container; or
   a vehicle in the automated storage and retrieval system.
30. The method of clause 28 or 29, wherein, prior to being expelled from the first farming system, the at least a portion of the first volume of fluid is confined within the tray of the first farming system.
31. The method of clause 30, wherein the tray of the first farming system comprises a substrate, and wherein the tray is configured to guide fluid received by the fluid entry portion such that the fluid is absorbed within the substrate prior to at least a portion of the fluid being expelled from the fluid exit portion.

## Claims

1. A container for vertical farming in an automated storage and retrieval system, comprising:
a frame defining a base and side walls upwardly extending from the base, the base and side walls defining an interior space; and
a tray fixation mechanism configured to receive and secure a tray configured to support a farmed organism within the interior space.

2. The container of claim 1, further comprising a tray guiding portion configured to guide at least a portion of the tray towards the tray fixation mechanism, optionally wherein the tray guiding portion comprises a first groove.

3. The container of claim 2, further comprising a tray entry portion configured to receive the tray prior to the tray guiding portion and to guide the tray towards the tray guiding portion, optionally wherein the tray entry portion comprises a second groove, further optionally wherein the tray entry portion tapers towards the tray guiding portion.

4. The container of any preceding claim, wherein the tray fixation mechanism comprises a flexible portion configured to exert pressure on the received tray to thereby inhibit its movement, optionally wherein the flexible portion is configured to elastically deform upon receiving the tray.

5. The container of any preceding claim, wherein the container further comprises at least one of:
a fluid conduit configured to guide collected fluid towards a target location below the container;
at least one support member configured to provide structural support to the container; and/or
one or more interface features configured to enable a vehicle of the automated storage and retrieval system to interact with the container, optionally wherein the one or more interface features are configured to enable a vehicle of the automated storage and retrieval system to interact with the container from above.

6. A tray for vertical farming in an automated storage and retrieval system, comprising:
a support structure configured to support a farmed organism;
a fluid entry portion configured to receive and guide fluid toward the support structure for providing to the farmed organism; and
a fluid exit portion configured to expel excess fluid from the tray.

7. The tray of claim 6, wherein the fluid entry portion comprises a sloped portion, optionally a funnel.

8. The tray of claim 6 or 7, wherein the tray comprises a securing mechanism configured to position and inhibit movement of the tray within an interior space of a container, optionally wherein the securing mechanism is configured to be received by a tray fixation mechanism of the container, optionally wherein the securing mechanism comprises a protrusion, further optionally wherein the protrusion is tapered.

9. The tray of any of claims 6-8, further comprising a substrate, supported by the support structure, configured to support the growth of the farmed organism.

10. The tray of any of claims 6-9, wherein the tray is configured to provide access to the farmed organism from at least two directions,
optionally wherein the support structure is configured to enable the farmed organism to be harvested by a vehicle of the automated storage and retrieval system from the at least two directions.

11. The tray of any of claims 6-10, wherein the tray is configured to confine fluid received by the fluid entry portion within the tray prior to expelling the fluid from the fluid exit portion, optionally wherein the tray is configured to guide fluid received by the fluid entry portion such that, when a substrate is present in the tray, the fluid is absorbed within the substrate.

12. A kit of parts suitable to be assembled to form the tray of any of claims 6-11, optionally wherein the kit of parts comprises two parts that can be joined together to form the tray of any of claims 6-11.

13. A system for vertical farming in an automated storage and retrieval system, comprising:
a container comprising a frame defining a base and side walls upwardly extending from the base, the base and side walls defining an interior space; and
a tray comprising:
a support structure configured to support a farmed organism;
a fluid entry portion configured to receive and guide fluid toward the support structure for providing to the farmed organism; and
a fluid exit portion configured to expel excess fluid from the tray;
wherein the tray is secured in the interior space of the container by a tray fixation mechanism of the container and/or a securing mechanism of the tray.

14. A method for vertical farming in an automated storage and retrieval system, the method comprising:
receiving a first volume of fluid by a first farming system, wherein the first farming system is configured as set out in claim 13;
guiding the first volume of fluid towards a first farmed organism supported by a tray held within the first farming system;
expelling at least a portion of the first volume of fluid from the tray of the first farming system; and
receiving the expelled portion of fluid at a target location below the farming system.

15. The method of claim 14, wherein the target location is at least one of:
a tray supporting a second farmed organism, optionally a fluid entry portion of said tray;
a container, optionally wherein the first farming system is stacked on the container; or
a vehicle in the automated storage and retrieval system.
